Europäisches Patentamt

European Patent Office

Office européen des brevets

(11) Veröffentlichungsnummer: **0 216 057**
**B1**

(12) **EUROPÄISCHE PATENTSCHRIFT**

(45) Veröffentlichungstag der Patentschrift: **25.04.90**

(51) Int. Cl.⁵: **A 01 C 7/04**

(21) Anmeldenummer: **86109972.9**

(22) Anmeldetag: **21.07.86**

(54) **Pneumatische Einzelkornsämaschine.**

(30) Priorität: **27.08.85 DE 3530514**

(43) Veröffentlichungstag der Anmeldung:
**01.04.87 Patentblatt 87/14**

(45) Bekanntmachung des Hinweises auf die
Patenterteilung:
**25.04.90 Patentblatt 90/17**

(84) Benannte Vertragsstaaten:
**FR GB IT SE**

(56) Entgegenhaltungen:
**FR-A-1 503 687**
**FR-A-2 339 326**
**FR-A-2 491 721**
**US-A-1 371 517**
**US-A-3 698 332**
**US-A-3 790 026**

(73) Patentinhaber: **Amazonen-Werke H. Dreyer
GmbH & Co. KG
Am Amazonenwerk 9-13
D-4507 Hasbergen-Gaste (DE)**

(72) Erfinder: **Dreyer, Heinz, Dr. Dipl.-Ing.
Am Amazonenwerk 7
D-4507 Hasbergen (DE)**

Courier Press, Leamington Spa, England.

**Beschreibung**

Die Erfindung betrifft eine pneumatique Einzelkorsämaschine gemäß des Oberbegriffes des Anspruches 1.

Eine derartige Einzelkornsämaschine ist bereits durch die DE—OS 2702418 bekannt. Diese pneumatische Einzelkornsämaschine weist einen Saatgutvorratsbehälter und eine drehbar angeordnete und sich in Fahrtrichtung erstreckende Vereinzelungstrommel auf, in deren Umfangsfläche gleichmäßig verteilt mehrere Lochreihen angeordnet sind. Weiterhin weist diese Einzelkornsämaschine ein Gebläse auf, welches außerhalb der Vereinzelungstrommel einen Überdruck gegenüber dem Innenraum der Vereinzelungstrommel erzeugt, so daß sich eine Druckdifferenz zwischen dem Innenraum der Vereinzelungstrommel und dem Außenbereich der Vereinzelungstrommel ergibt. Wenn die Vereinzelungstrommel durch einen Saatgutvorrat geführt wird, lagert sich an den Löchern jeweils ein Saatkorn an. Weiterhin ist im unteren Bereich im Innenraum der Vereinzelungstrommel ein Saatgutablöseelement angeordnet, welches auf einer Welle nebeneinander angeordnete Rollen aufweist, die mit ihrem Umfang über einen gewissen Bereich auf der Innenfläche der Vereinzelungstrommel anliegen und so an einer Stelle den Saugdruck an den Löchern unterbrechen, so daß die vereinzelten Saatkörner in die unterhalb der Vereinzelungstrommel angeordneten Saatgutauffangtrichter fallen. Die in die Auffangtrichter fallenden Saatkörner werden von dem Luftstrom über die sich an die Auffangtrichter anschließenden Leitungen bis zu den Säscharen geführt, über die die Saatkörper im Boden abgelegt werden.

Diese bekannte Einzelkornsämaschine ist vor allem für das Aussäen von Mais und Erdnüssen vorgesehen. Es ist in dieser Druckschrift nicht erwähnt, daß mit dieser bekannten Sämaschine auch Getreide ausgebracht werden kann.

Nachteilig ist zunächst bei dieser bekannten Maschine, daß keine Abdrehprobe durchgeführt werden kann, um so die Ausbringmenge feststellen zu können. Wollte man bei dieser bekannten Maschine eine Abdrehprobe durchführen, so sind die jeweiligen Schläuche von den Säscharen abzuziehen und in eine Auffangwanne zu legen, um so bei einem Abdrehvorgang die vereinzelten und ausgebrachten Körner auffangen zu können. Dieses ist jedoch in der Praxis viel zu umständlich und unpraktikabel.

Weiterhin ist diese bekannte Maschine nicht dafür vorgesehen, Getreide in engen Reihenabständen von etwa 8 cm ausbringen zu können. Vielmehr ist diese bekannte Maschine vorgesehen, um Mais in Reihen mit üblichen Reihenabständen von 50—75 cm abzulegen. Die Vereinzelungstrommel ist daher bei der bekannten Maschine auch nur sehr kurz gebaut und für nur insgesamt 8 Reihen vorgesehen.

Weiterhin ist bei dieser bekannten Maschine der Vorratsbehälter in einem Abstand in Fahrtrichtung gesehen hinter der Vereinzelungstrommel angeordnet. Nachteilig ist hierbei, daß das nur unter einem sehr flachen Winkel zwischen dem Vorratsbehälter und das die Vereinzelungstrommel umgebende Gehäuse angeordnete Verbindungsrohr verstopfen kann, so daß kein Saatgut zu der Vereinzelungstrommel gelangt. Weiterhin ist von Nachteil, daß über ein um die Vereinzelungstrommel herumlaufendes Becherwerk das Saatgut an die Vereinzelungstrommel herangebracht werden muß.

Des weiteren ist noch von Nachteil, daß zu Beginn der Arbeit zunächst eine Fehlstrecke entsteht, da die Vereinzelungstrommel erst mehr als eine halbe Umdrehung machen muß, bevor Saatgut den Auffangtrichtern bzw. den Säscharen zugeführt wird.

Des weiteren ist durch die deutsche Patentschrift 2826658 eine weitere Einzelkornsämaschine bekannt, die einen Saatgutvorratsbehälter und eine drehbar angeordnete langgestreckte und quer sich zur Fahrtrichtung erstreckende Vereinzelungstrommel aufweist, in deren Umfangsfläche gleichmäßig verteilt Lochreihen angeordnet sind. Weiterhin weist diese Einzelkornsämaschine ein Gebläse auf, welches einen Unterdruck im Innenraum der Vereinzelungstrommel erzeugt, so daß sich eine Druckdifferenz zwischen dem Innerraum der Vereinzelungstrommel und dem Außenbereich der Vereinzelungstrommel ergibt. Wenn die Vereinzelungstrommel durch einen Saatgutvorrat geführt wird, lagern sich an den Löchern jeweils einzelne Saatkörner an. Weiterhin ist im unteren Bereich ein an der Außenumfangsfläche der Vereinzelungstrommel anliegendes Saatgutablöseelement angeordnet, so daß die Druckdifferenz zwischen dem Innenraum und dem Außenbereich der Vereinzelungstrommel unterbrochen wird, damit die vereinzelten Saatkörner von der Vereinzelungstrommel abfallen und so über einen Zuleitungsmechanismus den Säscharen zugeführt werden, von denen sie dann im Boden abgelegt werden.

Von Nachteil ist zunächst bei dieser bekannten Einzelkornsämaschine, daß die sich quer zur Fahrtrichtung erstreckende Vereinzelungstrommel aus Einzelsegmenten für jede einzelne Lochreihe zusammengesetzt ist. Hierdurch ergibt sich ein aufwendiger und teurer Aufbau der Vereinzelungstrommel.

Weiterhin ist von Nachteil, daß bei dieser bekannten Einzelkornsämaschine ebenfalls keine Abdrehprobe in einfacher Weise durchgeführt werden kann.

Weiterhin ist diese bekannte Einzelkornsämaschine mit einer Fahrgassenschaltung ausgerüstet. Diese Fahrgassenschaltung besteht darin, daß jeweils von Hand ein Schieber geschlossen werden muß, so daß bestimmten bzw. einer bestimmten Lochreihe kein Saatgut zugeführt werden kann. Hierbei deckt dann der Schieber von außen diese Lochreihe der Vereinzelungstrommel ab.

Die FR—PS 15 03 687 zeigt ebenfalls eine pneumatische Einzelkornsämaschine gemäß des Oberbegriffes des Patentanspruches 1. Diese pneumatische Einzelkornsämaschine weist einen Saatgutvorratsbehälter und eine drehbar angeordnete und sich quer zur Fahrtrichtung erstreckende Vereinzelungstrommel auf, in deren Umfangsfläche gleichmäßig verteilt drei Lochreihen angeordnet sind. Der Innenraum dieser Vereinzelungstrommel wird über ein Sauggebläse mit einem Unterdruck beaufschlagt, so daß sich eine Druckdifferenz zwischen dem Inneraum der Vereinzelungstrommel und dem Außenbereich der Vereinzelungstrommel ergibt. Wenn die Vereinzelungstrommel durch einen Saatgutvorrat geführt wird, lagert sich an den Löchern an der Außenseite der Vereinzelungstrommel jeweils ein Saatkorn an. Weiterhin ist im unteren Bereich im Inneren der Vereinzelungstrommel ein sich über die Gesamtbreite der Vereinzelungstrommel erstreckendes Saatgutablöseelement angeordnet. Dieses Saatgutablöseelement unterbricht dann an einer Stelle den Saugdruck an den Löchern, so daß die vereinzelten Saatkörner in die unterhalb der Vereinzelungstrommel angeordneten Saatgutauffangtrichter fallen. Die in die Auffangtrichter fallenden Saatkörner werden von dem Luftstrom über die sich an die Auffangtrichter anschließenden Leitungen bis zum Boden geführt, wo die Saatkörner im Boden abgelegt werden.

Nachteilig ist zunächst bei dieser bekannten Maschine ebenfalls anzusehen, daß keine Abdrehprobe durchgeführt werden kann, um so die Ausbringmenge feststellen zu können. Wollte man bei dieser bekannten Maschine eine Abdrehprobe durchführen, so sind an den jeweiligen Enden der Schläuche Auffangwannen anzubringen, um so beim Abdrehvorgang die vereinzelten und ausgebrachten Körner auffangen zu können. Dieses ist jedoch in der Paxis viel zu umständlich und unpraktikabel. Weiterhin ist bei dieser bekannten Maschine nachteilig, daß das Getriebe nicht in engen Reibenabsänden von etwa 8 cm ausgebracht werden kann. Vielmehr wird bei dieser bekannten Maschine das Saatgut in sehr weiten Reihen abgelegt. Die Vereinzelungstrommel ist daher bei dieser bekannten Maschine auch sehr kurz gebaut und für nur insgesamt 3 Reihen vorgesehen.

Der Erfindung liegt nun die Aufgabe zugrunde, die bekannten Einzelkornsämaschinen vor allem dahingehend zu verbessern, daß mit einer sehr einfach ausgebildeten Einzelkornsämaschine Getreide auch in sehr engen Reihenabständen ausgebracht und gleichzeigt in einfacher Weise die auszubringende Menge überprüft werden kann.

Diese Aufgabe wird erfindungsgemäß dadurch gelöst, daß das Saatgutablöseelement in bzw. entgegen der Drehrichtung der Vereinzelungstrommel verstellbar ausgebildet ist. Infolge dieser Maßnahme kann das Saatgutablöseelement zumindest in zwei verschiedenen Positionen eingestellt werden. In der einen Position ist das Saatgutablöseelement so eingestellt, daß die Saatkörper sich an einer Stelle von der Vereinzelungstrommel lösen und in die Auffangtrichter fallen. Von den Auffangtrichtern aus werden dann die vereinzelten Saatkörner den einzelnen Säscharen zugeleitet. Weiterhin ist das Saatgutablöseelement auch in eine Position einstellbar, in der die vereinzelten Saatkörner erst von der Vereinzelungstrommel an einer Stelle abfallen können, an der sie in einer Auffangmulde aufgefangen werden. Hierdurch läßt sich dann sehr einfach ein Abdrehvorgang durchführen.

Ein sehr einfaches und preiswertes Saatgutablöseelement wird dadurch geschaffen, daß das Saatgutablöseelement als durchgehende Schiene ausgebildet ist und sich jeweils über die gesamte Länge der Vereinzelungstrommel erstreckt.

In einer weiteren Ausführungsform ist erfindungsgemäß vorgesehen, daß in der Schiene in Bezug auf die Vereinzelungstrommel in radialer Richtung Löcher angeordnet sind, und daß diese Löcher jeweils in dem Bereich der Lochreihen der Vereinzelungstrommel angeordnet sind. Infolge dieser Maßnahme kann an die Schiene eine Druckluftquelle angeschlössen werden, so daß diese Löcher mit Druckluft beaufschlagt werden können. Hierdurch wird erreicht, daß die vereinzelten Saatkörner über die Druckluft von der Vereinzelungstrommel abgeblasen und in die Auffangtrichter geschleudert werden.

Weiterhin ist vorgesehen, daß an der Sämaschine eine Fahrgassenschalteinrichtung angeordnet ist, mit der die Saatgutzufuhr zu bestimmten Säscharen in vorbestimmten Abständen in periodischer Weiderkehr abschaltbar ist. Infolge dieser Maßnahme können in einfachster Weise die in der heutigen modernen Landwirtschaft nicht mehr wegzudenkenden Fahrgassen für die nachfolgenden Spritz- und Düngearbeiten in einfachster Weise angelegt werden.

In einer Ausführungsform ist hierbei vorgesehen, daß in einigen der Vereinzelungstrommel zu den Säscharen führenden Leitungen mit der Fahrgassenschaltung verbundene Umschalteinrichtungen angeordnet sind, so daß das vereinzelte Saatgut den bestimmten Säscharen, die als Fahrgassensäschare bezeichnet werden, zugeleitet oder in den Vorratsbehälter zurückgeführt wird. Aufgrund dieser Vorrichtung wird das Saatgut, welches an sich im Boden abgelegt werden sollte, beim Anlegen der Fahrgasse in den Vorratsbehälter zurückgeleitet, so daß es nicht im Boden abgelegt wird. Hierbei ist erfindungsgemäß vorgesehen, daß an den zu den Fahrgassensäscharen führenden Leitungen eine in den Vorratshälter führende Abzweigleitung angeordnet ist und daß die Abzweigleitung an die in der Leitung angeordnete Umschalteinrichtung angeschlossen ist. Somit wird also in einfachster Weise bei der Stellung "Fahrgasse" der Umschalteinrichtung das Saatgut, welches an sich den Fahrgassensäscharen zugeführt würde, über die Abzweigleitung in den Vorratsbehälter zurückgeleitet. Somit wird kein Saatgut beim Anlegen der Farhgassen von den Farhgassensäscharen im Boden abgelegt. Wenn keine Fahrgässe angelegt wird, ist die Umschalteinrichtung so geschaltet, daß das Saatgut den Fahrgassensäscharen zugeführt wird.

In einer anderen Ausführungsform ist erfindungsgemäß vorgesehen, daß an der Vereinzelungstrommel in dem Bereich der Lochreihen, die den Fahrgassensäscharen zugeordnet sind, sich in Umfangsrichtung der Vereinzelungstrommel erstreckende Abdeckelemente angeordnet sind, die mit der Fahrgassenschaltung verbunden sind, und daß die Abdeckelemente diese Lochreihen in periodischer Wiederkehr abdecken. Infolge dieser Maßnahme wird beim Anlegen der Fahrgassen zumindest im Bereich der Vereinzelungstrommel, der durch den Saatgutvorrat geführt wird, die Lochreihe oder die Lochreihen, die den Fahrgasensäscharen zugeordnet sind, gegenüber der Überdruck- bzw. Unterdruckquelle abgedeckt, so daß sich keine Saatkörner an den Löchern dieser Lochreihen anlagern können.

In einer weiteren Ausführungsform ist erfindungsgemäß vorgesehen, daß die Vereinzelungstrommel leicht herausnehmbar angeordnet ist. Infolge dieser Maßnahme ist es in sehr einfacher Weise moglich, die Vereinzelungstrommel zu reinigen. Weiterhin ist es ebenfalls in einfachster Weise und in kürzester Zeit möglich, die jeweilige Vereinzelungstrommel gegen andere Ausführungen von Vereinzelungstrommeln auszutauschen, um so jeweils die entsprechende Vereinzelungstrommel einsetzen zu können. So ist es beispielsweise wünschenswert, bei dem Ausbringen von Getriede eine andere Vereinzelungstrommel als bei dem Ausbringen von beispielsweise Mais einzusetzen. Hierdurch ist es dann in einfachster Weise möglich, Vereinzelungstrommeln einzusetzen, die auf das jeweilige Saatgut abgestimmte Löcher unterschiedlicher Durchmesser aufweisen. Auch ist es möglich, daß beispielsweise Vereinzelungstrommeln eingesetzt werden, die eine unterschiedliche Anzahl von Lochreihen haben. Hierdurch kann. z.B. die Ausführung der Vereinzelungstrommel auf die verschiedenen gewünschten Ausbringmengen abgestimmt werden. Auch können die Löchreihen in unterschiedlichen Abständen bei verschiedenen Vereinzelungstrommeln angeordnet sein, so daß beispielswiese nur jedem zweiten oder dritten Säschar das Saatgut zugeführt wird. Dies ist beispielsweise wünschenswert, wenn die Einzelkornsämaschine sowohl für die Getreideaussaat wie auch für die Maisaussaat eingesetzt werden soll, da Getreide in wesentlich engeren Reihenabstanden als Mais abgelegt wird.

In einer Ausführungsform ist vorgesehen, daß die Vereinzelungstrommel seitlich herausnehmbar angeordnet ist. Hierdurch ergibt sich eine sehr einfache Montage. Um die Montage bzw. Demontage der Vereinzelungstrommel auch für eine Person möglich zu machen, ist erfindungsgemäß vorgesehen, daß die Vereinzelungstrommeln jeweils geteilt ausgebildet sind. Hierdurch wird die Vereinzelungstrommel sehr handlich. Um auch große Arbeitsbreiten bei sehr engen Reihenabständen zu erreichen, ist erfindungsgemäß vorgesehen, daß mehrere Vereinzelungstrommeln in Abständen nebeneinander angeordnet sind.

Wenn bei einer Einzelkornsämaschine mehrere Vereinzelungstrommeln vorgesehen sind, ist erfindungsgemäß vorgesehen, daß die Abstände zwischen den Vereinzelungstrommeln größer als die Länge der einzelnen Vereinzelungstrommeln ist. Hierdurch können die Vereinzelungstrommeln sehr einfach ausgebaut werden.

Weiterhin ist vorgesehen, daß Vereinzelungstrommel vor den unteren Bereich des Vorratsbehälters angeordnet ist, daß der Vorratsbehälter in seinem unteren Bereich einen schmalen langgestreckten Öffnungsbereich aufweist, der in Richtung der Vereinzelungstrommel schräg nach unten gerichtet ist und eine Höhe aufweist, die wesentlich kleiner als der Durchmesser der Vereinzelungstrommel ist. Infolge dieser Maßnahme ergibt sich eine sehr vorteilhafte Zuordnung zwischen Vorratsbehälter und Vereinzelungstrommel zueinander. Das sich im Vorratsbehälter befindliche Saatgut befindet sich unmittelbar an der Vereinzelungstrommel. Somit ist also keine Strecke zwischen der Vereinzelungstrommel und dem Vorratsbehalter über Schläuche, Rohre, Schächte etc. zu überbrücken. Hierdurch wird erreicht, daß in jedem Falle immer das sich im Vorratsbehälter befindliche Saatgut ohne Störung an der Vereinzelungsstelle der Vereinzelungstrommel anliegt.

Um eine sehr gute Vereinzelung der Saatkörner durch die Vereinzelungstrommel zu erreichen, ist erfindungsgemäß vorgesehen, daß die untere Öffnung des Vorratsbehälters sich in dem Bereich der unteren Hälfte der Vereinzelungstrommel befindet, und daß die obere Hälfte der Vereinzelungstrommel durch eine Wand des Vorratsbehälters gegen das sich im Vorratsbehälter befindliche Saatgut abgeschirmt ist. Weiterhin wird hierdurch erreicht, daß die sich evtl. zuviel an den Löchern anlagernden Saatkörner im ersten Viertel der Vereinzelungstrommel mittels eines Abstreifers abgestreift werden können und so ohne den Einsatz zusätzlicher Fördermittel in den Saatgutvorrat zurückfallen.

In einer weiteren Ausführungsform der Einzelkornsämaschine ist erfindungsgemäß vorgesehen, daß unterhalb der Vereinzelungstrommel eine Auffangrinne angeordnet ist. Infolge dieser Maßnahme werden die beim Abschalten des Gebläses von der Vereinzelungstrommel abfallenden Körner, wenn die Druckdifferenz zwischen Außen- und Innenbereich der Vereinzelungstrommel abgebaut ist, von dieser Auffangrinne aufgefangen. Die Körner fallen also nicht auf den Boden. Hierbei kann die Auffangrinne herausnehmbar, vorzugsweise herausziehbar an der Einzelkornsämaschine angeordnet sein. Hierdurch ist es dann möglich, in gewissen Zeitabständen die Auffangrinne seitlich aus der Einzelkornsämaschine herauszuziehen und in den Vorratsbehälter zu entleeren. Es ist jedoch auch denkbar, daß an der Auffangrinne eine mechanische oder pneumatische Fördereinrichtung angeordnet ist, so daß über diese Fördereinrichtung die Auffangrinne entleert und das sich in der Auffangrinne befindliche Saatgut über diese Fördereinrichtung in den Vorratsbehälter zurückgeführt wird.

Weitere Einzelheiten der Erfindung sind den übrigen Unteransprüchen, der Beispielsbeschreibung und den Zeichnungen zu entnehmen. Hierbei zeigen.

Fig. 1 die erfindungsgemäße Einzelkornsämaschine in Prinzipdarstellung und in der Seitenansicht,

Fig. 2 die Anordnung der Behälter und der Vereinzelungstrommel der erfindungsgemäßen Einzelkornsämaschine in Prinzipdarstellung und in der Ansicht von vorne,

Fig. 3 eine weitere Anordnung der Behälter und der Vereinzelungstrommel der Einzelkornsämaschine in Prinzipdarstellung und in der Ansicht von vorne,

Fig. 4 den Vereinzelungsmechanismus der Einzelkornsämaschine gem. Fig. 1 in der Seitenansicht und im Schnitt,

Fig. 5 den Vereinzelungsmechanismus der Einzelkornsämaschine in der Ansicht V—V,

Fig. 6 einen anderen Vereinzelungsmechanismus der Einzelkornsämaschine in der Seitenansicht und im Schnitt,

Fig. 7 die Vereinzelungstrommel in der Draufsicht und im Schnitt gem. der Fig. 6,

Fig. 8 eine weitere erfindungsgemäße Einzelkornsämaschine in Prinzipdarstellung und in der Seitenansicht und

Fig. 9 die Einzelkornsämaschine gem. Fig. 8 in Prinzipdarstellung und in der Draufsicht.

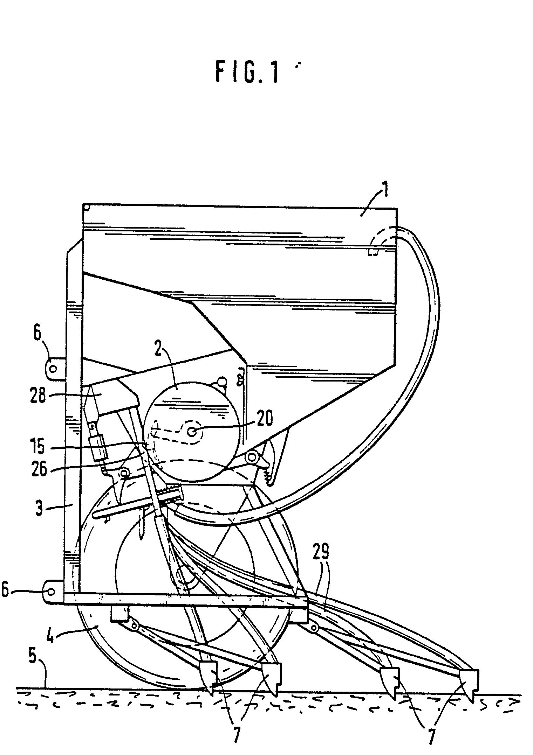

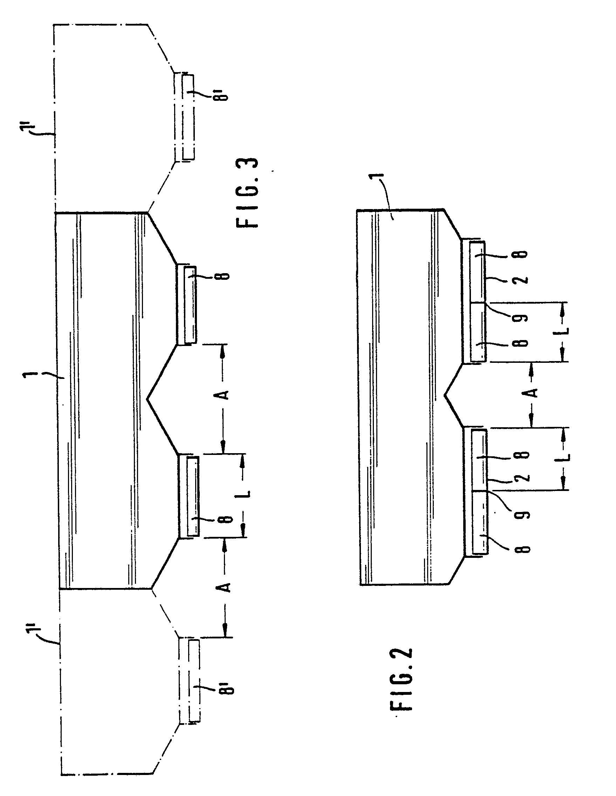

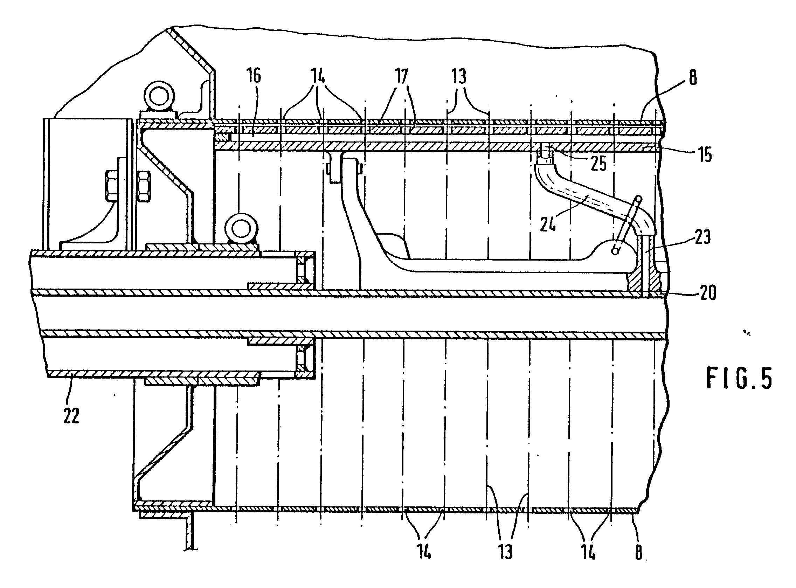

Die Einzelkornsämaschine gem. den Fig. 1, 4 und 5 weist einen Vorratsbehälter 1, einen Dosiermechanismus 2 sowie einen Rahmen 3 auf, der sich im Betrieb über die Laufräder 4 auf dem Boden 5 abstützt. An der Vorderseite des Rahmens 3 sind die Dreipunktkupplungselemente 6 angeordnet, mit der die Maschine an einen Dreipunktkuppler eines Ackerschleppers angekuppelt werden kann. Weiterhin sind an dem Rahmen 3 die Säschare 7 zum Einbringen des Saatgutes in aufrechter Ebene bewegbar in vier hintereinanderliegenden Querreihen angeordnet. Der Vorratsbehälter 1 erstreckt sich, wie in Fig. 2 dargestellt, quer zur Fahrtrichtung. Vor dem unteren Bereich des Vorratsbehälters 1 ist der Dosiermechanismus 2 angeordnet.

Dieser Dosiermechanismus 2 weist wobei langgesteckte und drehbar angeordnete Vereinzelungstrommeln 8 auf. Diese Vereinzelungstrommeln 8 sind leicht seitlich herausnehmbar vor dem unteren Bereich des Saatgutvorratsbehälters 1 angeordnet. Entsprechend Fig. 2 sind die Vereinzelungstrommeln 8 jeweils geteilt ausgebildet. Die Vereinzelungstrommeln 8 sind jeweils in der Mitte 9 geteilt, so daß die Vereinzelungstrommeln leicht herausgenommen werden können. Weiterhin sind die Vereinzelungstrommeln 8 in dem Abstand A nebeneinander angeordnet. Dieser Abstand A zwischen den Vereinzelungstrommeln 8 ist größer als die Länge L der einzeln Vereinzelungstrommeln 8. Somit ist es möglich, daß die eine Hälfte der Vereinzelungstrommel zur Mitte hin herausgenommen werden kann.

Auch bei der Vorratsbehälteranordnung gem. der Fig. 3 sind die Abstände A zwischen den Vereinzelungstrommeln 8 größer als die Länge L der einzelnen Vereinzelungstrommeln. Somit können auch diese Vereinzelungstrommeln 8 seitlich herausgenommen werden. Der mit der durchzogenen Linie dargestellte Saatgutvorratsbehälter 1 mit den Vereinzelungstrommeln 8 gem. Fig. 3 ist beispielsweise für eine Arbeitsbreite von 3 m bei einer Anordnung der Säschare in Reihenweiten von 8 bis 10 cm vorgesehen. Die Arbeitsbreite der Sämaschine kann sehr einfach vergrößert werden, indem seitlich neben dem Vorratsbehälter 1 die mit Strich punktierten Linien angedeuteten Vorratsbehälter 1' mit den Vereinzelungstrommeln 8' angeordnet werden. Selbstverständlich ist es jedoch auch möglich, daß diese zusätzlichen Vorratsbehälter 1' mit den Vereinzelungstrommeln 8' vor oder hinter dem Vorratsbehälter 1 angeordnet werden.

Die Vereinzelungstrommel 8 ist vor dem unteren Bereich des Vorratsbehälters 1 angeordnet. Der Vorratsbehälter 1 weist in seinem unteren Bereich den schmalen langgestreckten Öffnungsbereich 10 auf, der in Richtung der Vereinzelungstrommel 8 schrag nach unten gerichtet ist. Der Öffnungsbereich 10 des Vorratsbehälters 1 weist eine Höhe auf, die wesentlich kleiner als der Durchmesser der Vereinzelungstrommel 8 ist. Dieser Öffnungsbereich des Vorratsbehälters 1 befindet sich in dem Bereich der unteren Halfte der Vereinzelungstrommel 8. Die obere Hälfte der Vereinzelungstrommel 8 ist durch die wand 11 des Vorratsbehälters 1 gegen das sich im Vorratsbehalter 1 befindliche Saatgut, beispielsweise Getreide wie Gerste, Roggen, Hafer, Weizen etc., abgeschirmt. Weiter ist auf der der Vereinzelungstrommel 8 zugewandten Seite der Wand 11 der Schieber 12 in Höhenrichtung verschiebbar und feststellbar angeordnet, so daß die Größe des Öffnungsbereichs 10 des Vorratsbehälters 1 auf die entsprechende Saatgutsorte genau eingestellt werden kann.

Die Vereinzelungstrommel 8 wird von der Mitte der über einen nicht dargestellten regelbaren Antrieb, beispielsweise über einen Elektromotor oder einen Ölmotor bzw. über ein Regelgetriebe von dem Laufrad 4 angetrieben. In der Umfangsfläche der Vereinzelungstrommel 8 sind in gleichmäßigen Abständen in Reihen 13, die einen Abstand zueinander aufweisen, die Löcher 14 angeordnet. In dem Innenraum der Vereinzelungstrommel 8 ist das als durchgehende Schiene 15 ausgebildete Saatgutablöseelement angeordnet. Diese Schiene 15 erstreckt sich über die gesamte Länge der Vereinzelungstrommel 8. In der Schiene 15 ist in Längsrichtung der Schiene 15 die durchgehende Bohrung 16 angeordnet. Weiterhin sind auf der der Vereinzelungstrommel 8 zugewandten Seite der Schiene 15 in dem Bereich der Lochreihen 13 in radialer Richtung die Löcher 17 gebohrt, die mit der Bohrung 16 in Verbindung stehen.

Die Schiene 15 ist um die Drehachse 18 verschwenkbar angeordnet. Die Schiene 15 ist mit den Hebeln 19 mit dem durchgehenden Rohr 20, dessen Mittelpunkt mit der Drehachse 18 der Vereinzelungstrommel 8 zusammenfallt, verbunden. Außerhalb des Vorratsbehälters 1 ist an diesem Rohr 20 der Feststellhebel 21 für die Einstellung der Position der Schiene 15 angeordnet.

An dem Rahmen 3 der Einzelkornsämaschine ist das nicht dargestellte Saugluftgebläse angeordnet. Der Saugluftanschluß des Saugluftgebläses ist über das Rohr 22 mit dem Innenraum der Vereinzelungstrommel 8 verbunden, so daß mittels des Saugluftgebläses der Innenraum der Vereinzelungstrommel 8 mit einem Unterdruck beaufschlagt wird. Hierdurch ergibt sich somit eine Druckdifferenz zwischen dem Innenraum der Vereinzelungstrommel 8 und dem Außenbereich der Vereinzelungstrommel 8. Weiterhin ist an dem Rahmen 3 noch ein kleines Druckluftgebläse angeordnet. Dieses Druckluftgebläse ist mit dem Rohr 20 verbunden. Somit können über das Rohr 20, über die in dem Rohr 20 angeordnete Stichbohrung 23 und über den Schlauch 24 sowie über die in der Schiene 15 angeordnete Stichbohrung 25 die Bohrung 16 und somit die Löcher 17 in der Schiene 15 mit Druckluft beaufschlagt werden.

Weiterhin sind in dem Bereich der Schiene 15 vor der Vereinzelungstrommel 8 die jeweils einer Lochreihe 13 zugeordneten Injektorschleusen 26 angeordnet. Diese Injektorschleusen 26 weisen jeweils einen Auffangtrichter 27 auf. Weiter sind die Injektorschleusen 26 an den Druckluftkanal 28 angeschlossen, der mit dem Druckluftgebläse verbunden ist. Außerdem sind an den Injektorschleusen 26 jeweils die zu den Säscharen 7 führenden Leitungen 29 angeschlossen.

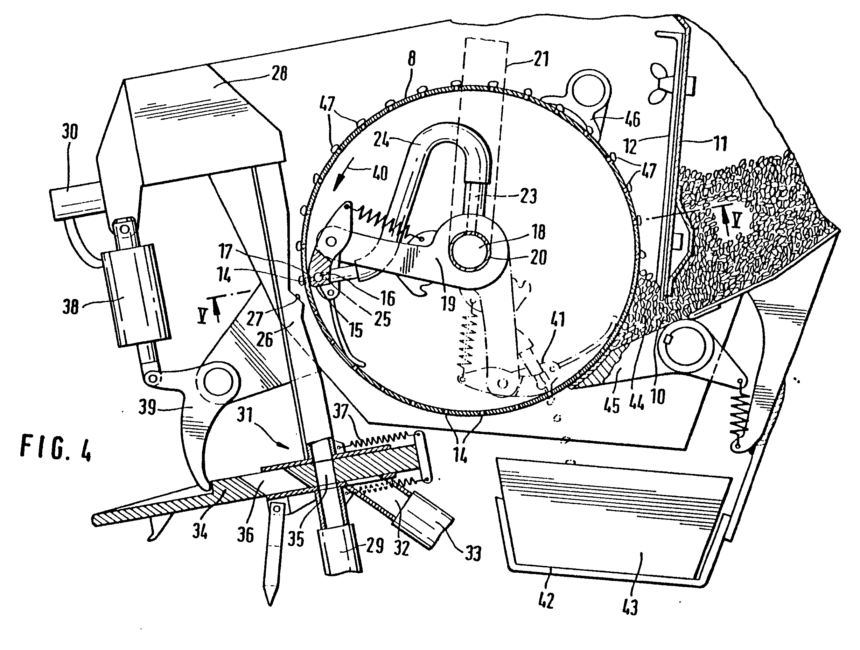

Des weiteren ist an dieser Getreideeinzelkornsämaschine die Fährgassenschalteinrichtung 30 angeordnet. Mit dieser Fahrgassenschalteinrichtung 30 wird die Saatgutzufuhr zu bestimmten Säscharen, die als Fahrgassensäschare bezeichnet werden, in vorbestimmten Abständen in periodischer Wiederkehr abgeschaltet. Entsprechend der Ausführung gem. Fig. 4 ist in den von der Vereinzelungstrommel 8 zu den Fahrgassensäscharen führenden Leitungen 29 die Umschalteinrichtung 31 angeordnet, so daß das vereinzelte Saatgut den Fahrgassensäscharen zugeleitet oder in den Vorratsbehälter 1 zurückgeführt wird. Hierzu weist die Umschalteinrichtung 31 die Abzweigleitung 32 auf. An diese Abzweigleitung 32 ist der in den Vorrätsbehälter 1 zurückführende Schlauch 33 angeschlossen. Die Umschalteinrichtung 31 weist den Schiebar 34 mit den Bohrungen 35 und 36 auf. Der Schieber 34 wird durch die Zugfedern 37 in seine dargestellte Position gezogen. In dieser dargestellten Position ist der Injektor 26 über die Bohrung 35 mit der Leitung 29, die zu den Fahrgassensäscharen führt, verbunden. Soll nun eine Fährgasse angelegt werden, so schaltet die Fahrgassenschaltung 30 über den Hubmagneten 38 und den Hebel 39 den Schieber 34 nach rechts, so daß der Injektor 26 mit der Abzweigleitung 32 über die Bohrung 36 in Verbindung steht. Somit wird das vereinzelte Saatgut von dem Injektor 26 über die Bohrung 36 und die Abzweigleitung 32 sowie dem Schlauch 33 in den Vorratsbehälter 1 zurückgeleitet. Wenn nach einer Überfahrt des Feldes die Fahrgasse angelegt worden ist, so wird über die Fahrgassenschaltung 30 der Hubmagnet 38 umgeschaltet, so daß die Zugfedern 37 den Schieber 34 wieder in die dargestellte Position ziehen.

Die Schiene 15 befindet sich in ihrer dargestellten Stellung in ihrer Betriebsstellung, wobei sich die Schiene 15 in dem bereich der Auffangtrichter 27 der Injektorschleusen befindet. Um bei der Einzelkornsämaschine eine Abdrehprobe durchzuführen, wird die Schiene 15 über den Hebel 21 in Drehrichtung 40 in die mit Strich punktierten Linien dargestellte Abdrehstellung 41 verschenkt. Unterhalb der Trommel 8 ist in der Halterung 42 die Abdrehmulde 43 zum Auffangen der vereinzelten Saatkörner angeordnet.

Im folgenden wird die Funktionsweise der erfindungsgemäßen Einzelkornsämaschine naher erläutert.

Während des Betriebes der Einzelkornsämaschine und des Ausbringens von Saatgut wird der Innenraum der Vereinzelungstrommel 8 von dem Saugluftgebläse mit Unterdruck beaufschlagt, so daß eine Druckdifferenz zwischen dem Innenraum der Trommel und dem Außenbereich der Trommel erzeugt wird. Weiterhin werden die Löcher 17 in der Schiene 15, die sich in ihrer Betriebsstellung befindet, mit Druckluft über das Druckluftgebläse beaufschlagt. Weiterhin werden die einzelnen Injektorschleusen 26 sowie die Leitungen 29, die zu den Säscharen 7 führen, ebenfalls mit Druckluft über den Druckluftkanal 28 von dem Druckluftgebläse beaufschlagt. Während der Überfahrt über das Feld, wenn Saatgut im Boden abgelegt werden soll, wird die Vereinzelungstrommel 8 in Drehrichtung 40 von den Laufrädern 4 über ein nicht dargestelltes Regelgetriebe angetrieben. Die Vereinzelungstrommel 8 dreht von unten der durch den Saatgutvorrat 44, der sich oberhalb der elastisch gegen die Vereinzelungstrommel 8 gedrückten Bodenplatte 45 vor dem Öffnungsbereich 10 des Vorratsbehälters 1 befindet. Wenn die Vereinzelungstrommel 8 durch diesen Saatgutvorrat 44 geführt wird, wird aufgrund der Druckdifferenz zwischen dem Außenbereich der Vereinzelungstrommel 8 und dem Innenbereich der Vereinzelungstrommel 8 jeweils ein Saatkorn an die Löcher 14 angesaugt. Sollte sich mehr als ein Saatkorn an einem Loch 14 angelagert haben, so wird dieses überzählige Saatkorn von dem auf dem Vorratsbehalter 1 zugewandten Seite der Vereinzelungstrommel 8 angeordneten Abstreifer 46 abgestreift. Diese überzähligen und abgeschreiften Saatkörner fallen dann wieder in den Saatgutvorrat 44 zurück.

Wenn die vereinzelten Saatkörner 47 zu der Stelle gelangen, an der die Schiene 15 angeordnet ist, wird die Druckdifferenz durch diese Schiene 15 unterbrochen, so daß die vereinzelten Saatkörner 47 von der Vereinzelungstrommel 8 abfallen. Gleichzeitig, während die Druckdifferenz zwischen dem Innen- und Außenbereich der Vereinzelungstrommel 8 unterbrochen wird, werden die Löcher 14, an denen die vereinzelten Saatkörner 47 anhafteten, mit Druckluft beaufschlagt, so daß die Saatkörner 47 in den Auffangtrichter 27 der jeweiligen Injektorschleuse 26 geschleudert werden. Die Saatkörner 47 werden in den Auffangtrichtern 27 weiterhin von dem in dem Auffangtrichter 47 der Injektorschleusen 26 herrschenden Unterdruck angesaugt und von dem Druckluftstrom in den Injektorschleusen 26 erfaßt und über die Leitungen 29 jeweils den Säscharen 7 zugeführt. Über die Säschare 7 werden dann die vereinzelten Saatkörner in gleichmäßigen Abständen im Boden abgelegt.

Um eine Abdrehprobe durchzuführen, wird über den Hebel 21 die Schiene 15 in die mit Strichpunktierten Linien dargestellte Abdrehstellung 41 verschwenkt. Während der Abdrehprobe, in der sich die Schiene 15 in der Abdrehstellung 41 befindet, werden die vereinzelten Saatkörner 47 an dem Auffangtrichter 27 vorbeigeführt und die Druckdifferenz wird erst kurz vor der Bodenklappe 45 durch die Schiene 15, die sich in der Abdrehstellung 41 befindet, unterbrochen. Somit fallen die Saatkörner in die Abdrehmulde 43 und werden hier aufgefangen.

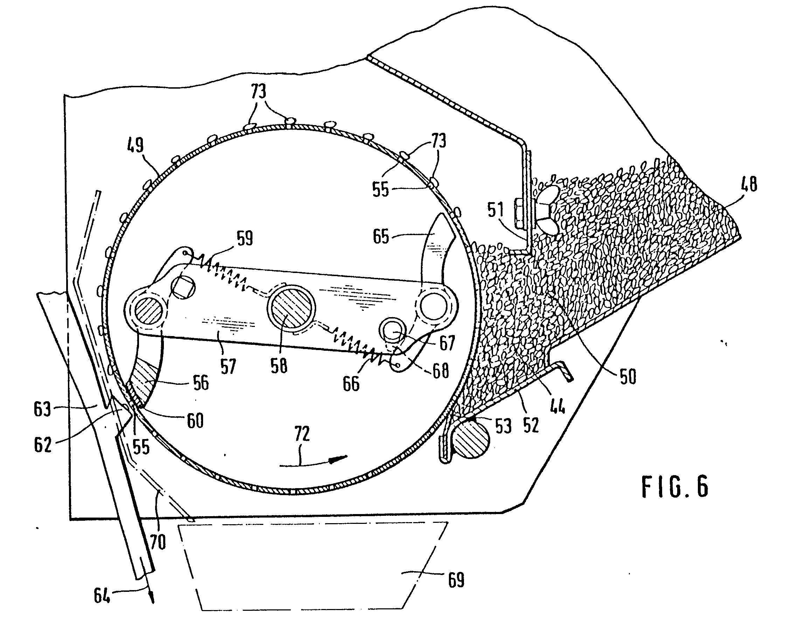

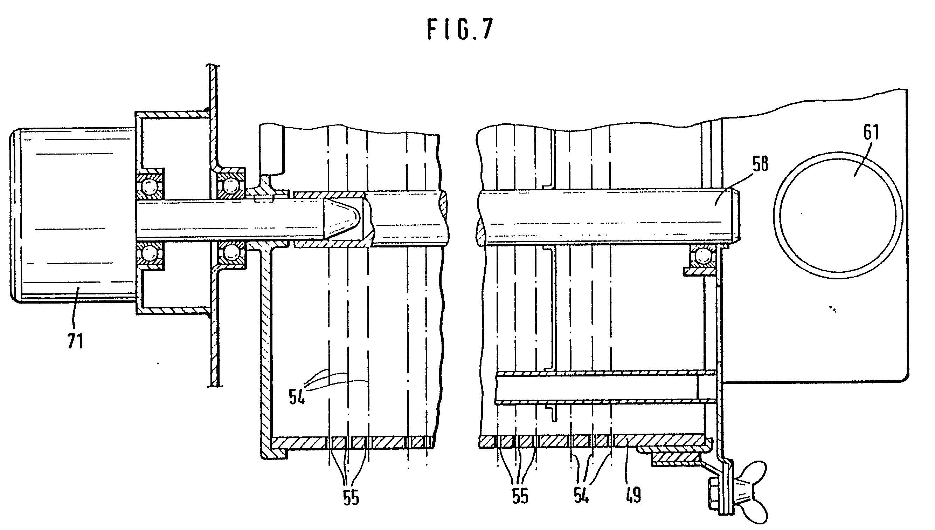

Die pneumatische Einzelkornsämaschine gem. den Fig. 6 und 7 weist ebenfalls einen Vorratsbehälter 48 auf, vor dessen unterem Bereich die Vereinzelungstrommel 49 angeordnet ist. Der Vorratsbehälter 48 weist in seinem unteren Bereich den schmalen langgestreckten Öffnungsbereich 50 auf. Der Öffnungsbereich 50 ist über den in Höhenrichtung verschiebbar angeordneten und festsetzbaren Schieber 51 einstellbar. Weiterhin weist der Vorratsbehälter 48 in seinem unteren Bereich die schwenkbar angeordnete Bodenklappe 52 auf. Diese Bodenklappe 52 kann nach unten verschwenkt werden, so daß der Vorratsbehälter einfach entleert werden kann. Zwischen der Bodenklappe 52 und der Vereinzelungstrommel 48 ist das durchgehende langgestreckte Dichtelement 53 angeordnet. Durch dieses Dichtelement 53 wird der Vorratsbehälter 48 gegenüber der Vereinzelungstrommel 49 abgedichtet.

Die Vereinzelungstrommel 49 weist in ihrer Umfangsfläche die in gleichmäßigen Abständen in Reihen 54 angeordneten Löcher 55 auf. Im Innenraum der Vereinzelungstrommel 49 ist das als durchgehende Schiene 56 ausgebildete Saatgutablöseelement angeordnet, welches sich über die gesamte Länge der Vereinzelungstrommel 49 erstreckt. Diese Schiene 56 ist mittels der Hebel 57 an der Welle 58 angeordnet. Über die Welle 58 und die Hebel 57 wird die Schiene 56 in ihrer gewünschten Position gehalten. Weiterhin ist die Schiene 56 schwenkbar an den Hebeln 57 angeordnet und wird mittels der Zugfeder gegen die Innenfläche der Vereinzelungstrommel 49 gedrückt. Die Schiene 56 weist auf ihrer der Innenfläche der Vereinzelungstrommel 49 zugewandten Seite die elastische Dichtleiste 60 auf. Der Innenraum der Vereinzelungstrommel 49 ist über den Sauglaufanschluß 61 mit einem nicht dargestellten Saugluftgebläse verbunden, so daß innerhalb des Innenraumes der Vereinzelungstrommel 49 ein Unterdruck erzeugt wird. Somit entsteht also eine Druckdifferenz zwischen dem Innenraum der Vereinzelungstrommel 49 und dem Bereich außerhalb der Vereinzelungstrommel 49.

In dem Bereich der Schiene 56 sind außerhalb der Vereinzelungstrommel 49 in unmittelbarer Nähe der Außenfläche der Vereinzelungstrommel 49 die Auffangtrichter 62 der Injektorschleusen 63 angeordnet. Die Injektorschleusen 63 sind jeweils mit einem nicht dargestellten Druckluftgebläse verbunden. Durch den von dem Druckluftgebläse erzeugten Luftstrom werden die vereinzelten Saatkörner in den Auffangtrichtern 62 angesaugt und in Richtung 64 über nicht dargestellte Schläuche zu Säscharen gefördert, so daß sie in gleichmäßigen Abständen im Boden abgelegt werden können.

Außerdem ist in dem Innenbereich der Vereinzelungstrommel 49 noch das Abdeckelement 65 angeordnet. Dieses Abdeckelement 65 ist in dem Bereich der Lochreihen 54 angeordnet, die den Fahrgassensäscharen zugeordnet sind. Dieses Abdeckelement 65 ist schwenkbar an dem Hebel 57 gelagert und wird über die Zugfeder 66 gegen die Innenfläche der Trommel 49 gedrückt. Dieses Abdeckelement 65 erstreckt sich in Umfangsrichtung der Trommel. Das Abdeckelement 65 liegt bei dem Anlegen einer Fahrgasse an der Innenfläche der Vereinzelungstrommel 49 an. Wenn keine Fahrgasse angelegt wird, wird des Abdeckelement 65 über den an der Schaltwelle 67 angeordneten Hebel 68 der Fahrgassenschaltung von der Innenfläche der Vereinzelungstrommel 49 abgehoben.

Unter der Vereinzelungstrommel 49 ist die mit strichpunktierten Linien dargestellte Auffangrinne 69 angeordnet. Weiterhin ist vor der Vereinzelungstrommel 49 auf ihrer dem Vorratsbehälter 48 abgewandten Seite, das mit strichpunktierten Linien dargestellte Leitblech 70 angeordnet. Sowohl die Auffangrinne 69 wie auch das Leitblech 70 erstrecken sich über die gesamte Länge der Vereinzelungstrommel 49. Die Auffangrinne 69 und das Leitblech 70 erstrecken sich in der Draufsicht gesehen über die gesamte Breite der Vereinzelungstrommel 49. Die Auffangrinne 69 und das Leitblech 70 dienen dazu, die vereinzelten Saatkörner, die sich an der Vereinzelungstrommel 49 befinden, aufzufangen, wenn das Saugluftgebläse abgeschaltet wird. Beim Abschalten des Saugluftgebläses bricht die Druckdifferenz zwischen dem Innenraum der Vereinzelungstrommel 49 und dem Raum außerhalb der Vereinzelungstrommel 49 zusammen, so daß die vereinzelten Saatkörner von der Vereinzelungstrommel 49 abfallen. Über das Leitblech 70 werden diese abfallenden Saatkörner in die Auffangrinne 69 geleitet und von der Auffangrinne 69 aufgefangen. Die Auffangrinne 69 ist herausnehmbar unterhalb der Vereinzelungstrommel 49 angeordnet, so daß sie bei Bedarf seitlich herausgezogen und in den Vorratsbehälter 48 entleert werden kann.

Im folgenden wird der Vereinzelungsvorgang der pneumatischen Getreidesämaschine gem. den Fig. 6 und 7 erläutert:

Während des Einsatzes der Einzelkornsämaschine und dem Ausbringen des vereinzelten Saatgutes auf dem Feld wird über das Saugluftgebläse in dem Innenraum der Vereinzelungstrommel 49 ein Unterdruck erzeugt. Wenn sich die Vereinzelungstrommel, die über den Ölmotor 71 in Drehrichtung 72 angetrieben wird und sich so durch den Saatgutvorrat 44 im unteren Bereich des Vorratsbehälters 48 dreht, lagern sich an den Löchern 55 die vereinzelten Saatkörner 73 an. Diese Saatkörner 73 werden über den Unterdruck, der im Innenraum der Trommel 49 herrscht, an die Löcher 55 angesaugt. Wenn die Saatkörner 73 die Schiene 56 erreichen, wird die Druckdifferenz, die zwichen dem Unterdruck im Innenbereich der Vereinzelungstrommel 49 herrscht und dem Druck außerhalb der Vereinzelungstrommel 49, unterbrochen, so daß die vereinzelten Körner 73 in die Auffangtrichter 62 der Injektorschleusen 63 fallen, Hierbei sind die Auffangtrichter 62 so breit, daß jeweils drei Lochreihen 54 einem Auffangtrichter 62 und somit einem Säschar zugeordnet sind. Die Löcher 55 in den Lochreihen 54 sind jeweils für eine Scharreihe zueinander versetzt angeordnet.

Wenn eine Fahrgasse angelegt werden soll, wird das Abdeckelement 65 gegen die Innenfläche der Vereinzelungstrommel 49 gedrückt und deckt so die Löcher 55 in den Lochreihen 54, die dem jeweiligen Fahrgassensäschar zugeordnet sind, ab, so daß bereits hier die vereinzelten Saatkörner in den Lochreihen 54, die den Fahrgassensäscharen zugeordnet sind, abfallen. Somit wird also den Fahrgassensäscharen kein Saatgut beim Anlegen einer Fahrgasse zugeführt. Während des Anlegens der Fahrgasse befindet sich das Abdeckelement 65 in der dargestellten Position. Wenn keine Fahrgasse angelegt werden soll, wird das Abdeckelement 65 über den Hebel 68 etwas von der Innenfläche der Vereinzelungstrommel 49 abgehoben, so daß der Unterdruck auch in diesem Bereich erhalten bleibt.

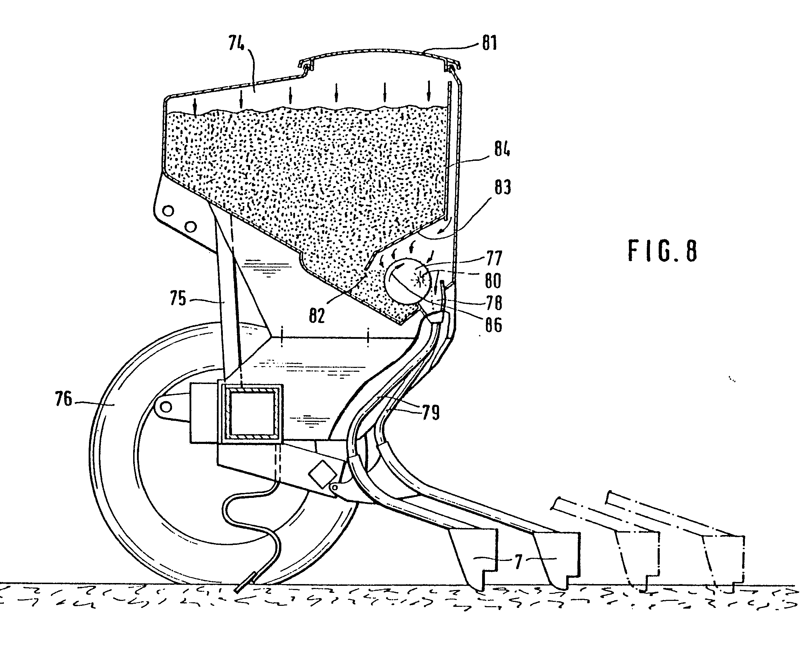

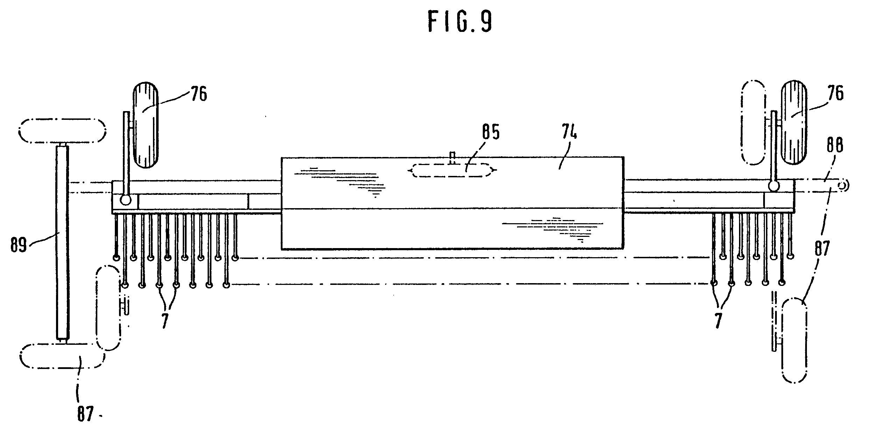

Die Getreideeinzelkornsämaschine gem. den Fig. 8 und 9 weist den Vorratsbehälter 74, den Rahmen 75, der sich über die Laufräder 76 während des Betriebes auf dem Boden abstützt, auf. An dem Rahmen 75 sind die Säschare 7 in aufrechter Ebene bewegbar angeordnet. In den unteren Berich des Vorratsbehälters 74 ist die als Vereinzelungselement ausgebildete Vereinzelungstrommel 77 drehbar angeordnet. Diese Vereinzelungstrommel 77 wird von den Laufrädern 76 angetrieben. Unterhalb der Vereinzelungstrommel 77 sind die Auffangtrichter 78 angeordnet, an die sich jeweils die mit dem Säscharen 7 verbundenen Saatleitungsschläuche 79 anschließen.

Die Vereinzelungstrommel 77 weist in gleichmäßigen Abständen in Reihen angeordnete Löcher auf, die in der Umfangsfläche der Vereinzelungstrommel 77 angeordnet sind. In dem Innenraum der Vereinzelungstrommel 77 ist das sternförmig ausgebildete Saatgutablöseelement 80 angeordnet. Der Vorratsbehälter 74 weist einen Deckel 81 auf, der den Vorratsbehälter 74 dicht verschließt. Der Vorratsbehälter 74 und die Vereinzelungstrommel 77 sind über Dichtelemente miteinander abgedichtet. Die Außenseiten der Vereinzelungstrommel 77 sind jedoch offen, so daß im Innenraum der Vereinzelungstrommel 77 der normale Luftdruck herrscht. Die Vereinzelungstrommel 77 ist vor dem unteren Bereich des Vorratsbehälters angeordnet. Der Vorratsbehälter weist in seinem unteren Bereich den schmalen langgestreckten Öffnungsbereich 82 auf, der in Richtung der Vereinzelungstrommel 77 schräg nach unten gerichtet ist. Die obere Hälfte der Vereinzelungstrommel 77 wird durch die schräge Bodenwand 83 und die senkrechte Wand 84 gegen das sich im Vorratsbehälter 74 befindliche Saatgut abgeschirmt.

Weiterhin ist unterhalb des Vorratsbehälters 74 das Druckluftgebläse 85 angeordnet. Das Druckluftgebläse 85 ist über einen Anschluß an den Vorratsbehälter angeschlössen. Über das Druckluftgebläse 85 wird der mit dem Deckel 81 dicht verschlossene Vorratsbehälter 74 und der Außenbereich der Vereinzelungstrommel 77 unter einem Überdruck gegenüber dem in dem Innenraum der Vereinzelungstrommel 77 herrschenden normalen Außendruck gesetzt. Wenn die Vereinzelungstrommel 77 in Drehrichtung 86 von den Laufrädern 76 angetrieben wird, bewegt sich die Trommel durch den Saatgutvorrat. Hierbei lagern sich an den einzelnen Löchern, die sich in der Außenwand der Vereinzelungstrommel 77 befinden. Saatkörner an. Hierbei lagert sich an jedem Loch ein Saatkorn an. Diese Saatkörner werden durch den höheren Druck außerhalb der Vereinzelungstrommel 77 gegenüber dem niedrigeren inneren Druck innerhalb der Vereinzelungstrommel 77 an diesen Löchern festgehalten. Wenn die vereinzelten Saatkörner, indem sich die Vereinzelungswalze 77 weiterdreht, zu dem Saatgutablöseelement 80 gelangen, wird die Druckdifferenz zwischen der Außenfläche der Vereinzelungstrommel 77 und der Innenfläche der Vereinzelungstrommel 77 unterbrochen, so daß die vereinzelten Saatkörner von der Vereinzelungstrommel 77 sich lösen und in die Auffangtrichter 78 fallen. In diesen Auffangtrichtern 78 werden diese vereinzelten Saatkörner von dem von dem Druckluftgebläse 85 erzeugten Luftstrom erfaßt und über die Saatleitungsschläuche 79 zu den Säscharen 7 geblasen, so daß sie von den Säscharen 7 in gleichmäßigen Abständen in den Boden abgelegt werden können.

In der Fig. 9 ist die Transporteinrichtung 87 mit strichpunktierten Linien angedeutet. Hierzu ist auf der einen Seite der Sämaschine die Anhängedeichsel 88 der Transporteinrichtung 87 schwenkbar bzw. abnehmbar angeordnet. Auf der anderen Seite der Drillmaschine ist der ansteckbare Radsatz der Transporteinrichtung 87 anzuordnen.

**Patentansprüche**

1. Pneumatische Einzelkornsämaschine, insbesondere für Getreide, mit einem Saatgutvorratsbehälter (1, 48) und einer drehbar angeordneten langgestreckten Vereinzelungstrommel (8, 49), in deren Umfangsfläche gleichmäßig verteilt Reihen von Löchern (14, 55) angeordnet sind, und mit einem Gebläse, welches eine Druckdifferenz zwischen dem Innenraum der Vereinzelungstrommel (8, 49) und dem Außenbereich der Vereinzelungstrommel (8, 49) erzeugt, so daß, wenn die Vereinzelungstrommel (8, 49) durch einen Saatgutvorrat geführt wird, sich an den Löchern (14, 55) jeweils ein Saatkorn anlagert, sowie mit zumindest einem an der Vereinzelungstrommel (8, 49) anliegenden Saatgutablöseelement (15, 56) und auf der dem Saatgutablöseelement (15, 56) abgewandten Seite der Vereinzelungstrommel (8, 49) angeordneten Auffangtrichter für die vereinzelten Saatkörner wobei die Auffangtrichter (27, 62) den Lochreihen (13, 54) der Vereinzelungstrommel (8, 49) und den das Saatgut in dem Boden abgelegenden Säscharen (7) entsprechend zugeordnet sind, dadurch gekennzeichnet, daß das Saatgutablöseelement (15, 56) derart in oder entgegen der Drehrichtung (40, 72) der Vereinzelungstrommel (8, 49) verstellbar angeordnet ist, daß das Saatgutablöseelement (15, 56) in die Betriebsstellung und in eine Abdrehstellung (41) einstellbar ist.

2. Einzelkornsämaschine nach Anspruch 1, dadurch gekennzeichnet, daß das Saatgutablöseelement als durchgehende Schiene (15, 56) ausgebildet ist und sich jeweils über die gesamte Länge der Vereinzelungstrommel (8, 49) erstreckt.

3. Einzelkornsämaschine nach Anspruch 2, dadurch gekennzeichnet, daß in der Schiene (15) in Bezug auf die Vereinzelungstrommel (8) in radialer Richtung Löcher (17) angeordnet sind, daß diese Löcher (17) jeweils in dem Bereich der Lochreihen (13) der Vereinzelungstrommel (8) angeordnet sind.

4. Einzelkornsämaschine nach Anspruch 2, dadurch gekennzeichnet, daß die Schiene (15) auf ihrer an der Vereinzelungstrommel (8) anliegenden Seite Löcher (17) aufweist, die mit einem Druckluftanschluß verbunden sind.

5. Einzelkornsämaschine nach Anspruch 1, dadurch gekennzeichnet, daß an der Sämaschine eine Fahrgassenschalteinrichtung (30) angeordnet ist, mit der die Saatgutzufuhr zu bestimmten Säscharen in vorbestimmten Abständen in periodischer Wiederkehr abschaltbar ist.

6. Einzelkornsämaschine nach Anspruch 5, dadurch gekennzeichnet, daß in den von der Vereinzelungstrommel (8) zu den Säscharen führenden Leitungen (29) mit der Fahrgassenschaltung verbundene Umschalteinrichtung (31) angeordnet sind, so daß das vereinzelte Saatgut den bestimmten Säscharen (Fahrgassensäscharen) zugeleitet oder in den Vorratsbehälter (1) zurückgeführt wird.

7. Einzelkornsämaschine nach Anspruch 6, dadurch gekennzeichnet, daß an den zu den Fahrgassensäscharen führenden Leitungen (29) eine in den Vorratsbehälter (1) führende Abzweigleitung (32) angeordnet ist, und daß die Abzweigleitung (32) an die in der Leitung (29) angeordneten Umschalteinrichtung (31) angeschlossen ist.

8. Einzelkornsämaschine nach Anspruch 5, dadurch gekennzeichnet, daß an der Vereinzelungstrommel (49) in dem Bereich der Lochreihen (54), die den Fahrgassensäscharen zugeordnet sind, sich in Umfangsrichtung der Vereinzelungstrommel (49) erstreckende Abdeckelemente (65) angeordnet sind, die mit der Fahrgassenschaltung verbunden sind, daß die Abdeckelemente (65) diese Lochreihen (54) in periodischer Wiederkehr abdecken.

9. Einzelkornsämaschine nach Anspruch 1 dadurch gekennzeichnet, daß die Trommel (8, 49) leicht herausnehmbar angeordnet ist.

10. Einzelkornsämaschine nach Anspruch 9, dadurch gekennzeichnet, daß die Vereinzelungstrommel (8, 49) seitlich herausnehmbar angeordnet ist.

11. Einzelkornsämaschine nach Anspruch 9, dadurch gekennzeichnet, daß die Vereinzelungstrommel (8) jeweils geteilt ausgebildet ist.

12. Einzelkornsämaschine nach Anspruch 9, dadurch gekennzeichnet, daß mehrere Vereinzelungstrommeln (8) in Abständen (A) nebeneinander angeordnet sind.

13. Einzelkornsämaschine nach Anspruch 10 oder 12, dadurch gekennzeichnet, daß die Abstände (A) zwischen den Vereinzelungstrommeln (8) jeweils größer als die Länge (L) der einzelnen Vereinzelungstrommeln (8, 8') sind.

14. Einzelkornsämaschine nach Anspruch 1, 5 oder 9, dadurch gekennzeichnet, daß die vereinzelten Saatkörner (47, 73) mittels Druckluft zu den jeweiligen Säscharen (7) gefördert werden.

15. Einzelkornsämaschine nach Anspruch 14, dadurch gekennzeichnet, daß die Säschare (7) in vier hintereinanderliegenden Querreihen angeordnet sind.

16. Einzelkornsämaschine nach Anspruch 1, dadurch gekennzeichnet, daß die Vereinzelungstrommel (8, 49, 76) vor dem unteren Bereich des Vorratsbehälters (1, 48, 74) angeordnet ist, daß der Vorratsbehälter (1, 48, 74) in seinem unteren Bereich einen schmalen langgestreckten Öffnungsbereich (10, 15, 82) aufweist, der in Richtung der Vereinzelungstrommel (8, 49, 76) schräg nach unten gerichtet ist und eine Höhe aufweist, die wesentlich kleiner als der Durchmesser der Vereinzelungstrommel (8) ist.

17. Einzelkornsämaschine nach Anspruch 16, dadurch gekennzeichnet, daß die untere Öffnung (10) des Vorratsbehälters (1) sich in dem Bereich der unteren Hälfte der Vereinzelungstrommel (8) befindet, und daß die obere Hälfte der Vereinzelungstrommel (8, 49, 76) durch eine Wand (11, 83, 84) des Vorratsbehälters (1, 48, 74) gegen das sich im Vorratsbehälter (1, 48, 74) befindliche Saatgut abgeschirmt ist.

18. Einzelkornsämaschine nach Anspruch 1, dadurch gekennzeichnet, daß unterhalb der Vereinzelungstrommel (49) eine Auffangrinne (69) angeordnet ist.

19. Einzelkornsämaschine nach Anspruch 18, dadurch gekennzeichnet, daß die Auffangrinne (69) sich über die gesamte Länge und die Breite der Vereinzelungstrommel (49) erstreckt.

20. Einzelkornsämaschine nach Anspruch 18, dadurch gekennzeichnet, daß die Auffangrinne (69) herausnehmbar, vorzugsweise seitlich herausziehbar angeordnet ist.

**Revendications**

1. Semoir de précision, pneumatique, notamment pour des céréales, comportant une trémie d'alimentation de semences (1, 48) et un tambour séparateur (8, 49), allongé, monté à rotation, dont la surface périphérique comporte des rangées de trous (14, 55) réparties régulièrement ainsi qu'une machine soufflante qui crée une différence de pression entre l'intérieur du tambour séparateur (8, 49) et l'extérieur du tambour (8, 49) pour que lorsque le tambour séparateur (8, 49) passe dans les semences, une graine de semence se dépose au niveau de chaque trou (14, 55) ainsi qu'au moins un élément de soufflage de graines (15, 56) s'appliquant contre le tambour séparateur (8, 49) ainsi qu'au moins un élément de décrochage (15, 56) pour détacher les graines, des trémies de réception pour les graines ainsi séparées étant prévues sur la face du tambour séparateur (8, 49) opposée à l'élément de décrochage (15, 56), les trémies de réception (27, 62) étant disposées suivant les rangées de trous (15, 54) du tambour séparateur (8, 49) et des socs de semoir (7) déposant les graines dans le sol, caractérisé en ce que l'élément de décrochage de graines (15, 56) est monté réglable suivant ls sens de rotation (4, 72) ou dans le sens opposé du sens de rotation du tambour séparateur (8, 49), et en ce que l'élément de décrochage de graines (15, 56) est réglable en position de fonctionnement et en position de dosage (41).

2. Semoir de précision selon la revendication 1, caractérisé en ce que l'élément de décrochage servant à séparer les graines est constitué par un rail continu (15, 56) qui s'étend respectivement sur toute la longueur du tambour séparateur (8, 49).

3. Semoir de précision selon la revendication 2, caractérisé par des trous (17) réalisés dans le rail (15), dans la direction radiale par rapport au tambour séparateur (8), ces trous (17) étant situés chaque fois au niveau des rangées de trous (13) du tambour séparateur (8).

4. Semoir de précision selon la revendication 2, caractérisé en ce que le rail (15) comporte des trous (17) dans son côté appliqué contre le tambour séparateur (8), trous qui sont reliés à un raccord d'alimentation en air comprimé.

5. Semoir de précision selon la revendication 1, caractérisé en ce qu'il comporte un jalonneur (30) pour les voies de passage, et qui coupe l'alimentation en graines vers des socs de semoir, déterminés, à des intervalles prédéterminés suivant une répétition périodique.

6. Semoir de précision selon la revendication 5, caractérisé en ce que les conduites (29) qui relient le tambour séparateur (8) aux socs de semoir comportent un dispositif inverseur (11) relié à la commande du jalonneur, pour que les graines, séparées, puissent être envoyées aux socs de semoir, déterminés (socs de semoir des voies de passage) ou être reconduites vers la trémis d'alimentation (1).

7. Semoir de précision selon la revendication 6, caractérisé en ce que les conduites (29), aboutissant aux socs de semoir correspondant aux voies de passage, comportent une conduite de dérivation (32) aboutissant à la trémie d'alimentation (1) et cette conduite de dérivation (32) est reliée au dispositif inverseur (31) de chaque conduite (29).

8. Semoir de précision selon la revendication 5, caractérisé par des éléments de recouvrement (65) prévus dans la zone des rangées de trous (54) du tambour séparateur (49), auxquelles sont associés les socs de semoir des voies de passage, ces éléments de recouvrement (65) s'étendant dans la direction périphérique du tambour séparateur (49) sont reliés au circuit de commutation des voies de passage de manière que ces éléments de recouvrement (65) recouvrent ces rangées de trous (54) suivant une répétition périodique.

9. Semoir de précision selon la revendication 1, caractérisé en ce que le tambour (8, 49) est facilement extractible.

10. Semoir de précision selon la revendication 9, caractérisé en ce que le tambour séparateur (8, 49) est extractible latéralement.

11. Semoir de précision selon la revendication 9, caractérisé en ce que le tambour extractible (8) est divisé.

12. Semoir de précision selon la revendication 9, caractérisé en ce qu'il comporte plusieurs tambours séparateurs (8) disposés les uns à côté des autres à des intervalles (A).

13. Semoir de précision selon la revendication 10 ou 12, caractérisé en ce que les intervalles (A) entre les tambours séparateurs (8) sont chaque fois supérieurs à la longueur (L) des différents tambours séparateurs (8, 8').

14. Semoir de précision selon les revendications 1, 5 ou 9, caractérisé en ce que les graines de semence (47, 73), séparées, sont transférées par de l'air comprimé vers les socs de semoir (7), respectifs.

15. Semoir de précision selon la revendication 14, caractérisé en ce que les socs de semoir (7) sont répartis en quatre rangées transversales disposées l'une derrière l'autre.

16. Semoir de précision selon la revendication 1, caractérisé en ce que le tambour séparateur (8, 49, 76) est prévu en avant de la zone inférieure de la trémie d'alimentation (1, 48, 74), cette trémie ayant dans sa zone inférieure, une zone d'ouverture (10, 15, 82) allongée, étroite, dirigée en biais vers le bas vers le tambour séparateur (8, 49, 76) et présentant une hauteur beaucoup plus faible que le diamètre du tambour séparateur (8).

17. Semoir de précision selon la revendication 16, caractérisé en ce que l'ouverture inférieure (10) de la trémie d'alimentation (1) se trouve dans la zone de la moitié inférieure du tambour séparateur (8) et la moitié supérieure de ce tambour (8, 48, 76) est protégée par une cloison (11, 83, 84) de la trémie (1, 48, 74) contre la semence se trouvant dans la trémie d'alimentation (1, 48, 74).

18. Semoir de précision selon la revendication 1, caractérisé par une goulotte réceptrice (69) en-dessous du tambour séparateur (49).

19. Semoir de précision selon la revendication 18, caractérisé en ce que la goulotte réceptrice (69) s'étend sur toute la longueur et toute la largeur du tambour séparateur (49).

20. Semoir de précision selon la revendication 18, caractérisé en ce que la goulotte réceptrice (69) est extractible de préférence par extraction latérale.

**Claims**

1. Pneumatic seed drill for sowing single seeds, more especially for corn crops, including a seed hopper (1, 48), a rotatably disposed, elongate singling-out drum (8, 49), regularly distributed rows of holes (14, 55) being disposed in the circumferential area of said drum, a fan which produces a pressure difference between the interior of the singling-out drum (8, 49) and the outer region of the singling-out drum (8, 49) so that, when the singling-out drum (8, 49) is conducted through a seed store, one seed is deposited at each of the holes (14, 55), at least one seed separating element (15, 56) which is situated adjacent to the singling-out drum (8, 49), and collecting funnels which are disposed on the side of the singling-out drum (8, 49) remote from the seed separating element (15, 56) for collecting the singled-out seeds, the collecting funnels (27, 62) being associated, in corresponding manner, with the rows of holes (13, 54) in the singling-out drum (8, 49) and the sowing coulters (7) which deposit the seeds in the ground, characterised in that the seed separating element (15, 56) is disposed so as to be adjustable in the direction of rotation (40, 72) of the singling-out drum (8, 49), or in the direction opposed thereto, such that the seed separating element (15, 56) can be set into the operational position and into a rotated position (41).

2. Seed drill for sowing single seeds according to claim 1, characterised in that the seed separating element is a continuous bar (15, 56) and extends over the entire length of the singling-out drum (8, 49).

3. Seed drill for sowing single seeds according to claim 2, characterised in that holes (17) are disposed in the bar (15) in a radial direction relative to the singling-out drum (8), and these holes (17) are each disposed in the respective region of the rows of holes (13) in the singling-out drum (8).

4. Seed drill for sowing single seeds according to claim 2, characterised in that the bar (15) is provided with holes (17) on its side adjacent to the singling-out drum (8), which holes are connected to a compressed air connection.

5. Seed drill for sowing single seeds according to claim 1, characterised in that a tramline control device (30) is disposed on the seed drill and permits the supply of seeds to specific sowing coulters to be switched-off at predetermined spacings in a periodic cycle.

6. Seed drill for sowing single seeds according to claim 5, characterised in that changeover mechanisms (31), which are connected to the tramline control device, are disposed in the conduits leading from the singling-out drum (8) to the sowing coulters, so that the singled-out seed is conducted to the predetermined sowing coulters (tramline sowing coulters) or guided back into the hopper (1).

7. Seed drill for sowing single seeds according to claim 6, characterised in that a branch conduit (32), which leads into the hopper (1), is disposed on the conduits (29) leading to the tramline sowing coulters, and in that the branch conduit (32) is connected to the changeover mechanism (31) disposed in the conduit (29).

8. Seed drill for sowing single seeds according to claim 5, characterised in that cover elements (65), which extend in the circumferential direction of the singling-out drum (49) and are connected to the tramline control device, are disposed on the singling-out drum (49) in the region of the rows of holes (54), which are associated with the tramline sowing coulters, and in that the cover elements (65) cover these rows of holes (54) in a periodic cycle.

9. Seed drill for sowing single seeds according to claim 1, characterised in that the drum (8, 49) is disposed so as to be easily removable.

10. Seed drill for sowing single seeds according to claim 9, characterised in that the singling-out drum (8, 49) is disposed so as to be laterally removable.

11. Seed drill for sowing single seeds according to claim 9, characterised in that each singling-out drum (8) is divided.

12. Seed drill for sowing single seeds according to claim 9, characterised in that a plurality of singling-out drums (8) are disposed adjacent to one another with spacings (A) therebetween.

13. Seed drill for sowing single seeds according to claim 10 or 12, characterised in that the spacings (A) between the singling-out drums (8) are each greater than the length (L) of the individual singling-out drums (8, 8').

14. Seed drill for sowing single seeds according to claims 1, 5 or 9, characterised in that the singled-out seeds (47, 73) are conveyed to the respective sowing coulters (7) by means of compressed air.

15. Seed drill for sowing single seeds according to claim 14, characterised in that the sowing coulters (7) are disposed in four transverse rows situated one behind the other.

16. Seed drill for sowing single seeds according to claim 1, characterised in that the singling-out drum (8, 49, 76) is disposed in front of the lower region of the hopper (1, 48, 74), in that the hopper (1, 48, 74) has, in its lower region, a narrow elongate opening (10, 15, 82) which is directed downwardly in an inclined manner in the direction of the singling-out drum (8, 49, 76) and has a height which is substantially smaller than the diameter of the singling-out drum (8).

17. Seed drill for sowing single seeds according to claim 16, characterised in that the lower opening (10) in the hopper (1) is situated in the region of the lower half of the singling-out drum (8), and in that the upper half of the singling-out drum (8, 49, 76) is screened from the seed material situated in the hopper (1, 48, 74) by means of a wall (11, 83, 84) of the hopper (1, 48, 74).

18. Seed drill for sowing single seeds according to claim 1, characterised in that a collecting trough (69) is disposed beneath the singling-out drum (49).

19. Seed drill for sowing single seeds according to claim 18, characterised in that the collecting trough (69) extends over the entire length and width of the singling-out drum (49).

20. Seed drill for sowing single seeds according to claim 18, characterised in that the collecting trough (69) is disposed so as to be removable, preferably so as to be laterally extractable.

FIG.1

FIG. 3

FIG. 2

FIG. 4

FIG.5

EP 0 216 057 B1

FIG. 6

FIG.7

EP 0 216 057 B1

FIG.8

FIG.9